# EUROPEAN PATENT SPECIFICATION

(11) **EP 1 149 491 B1**
(45) Date of publication and mention of the grant of the patent: **07.10.2009**
(21) Application number: 00971376.9
(22) Date of filing: 12.10.2000
(51) Int. Cl.: H04N 7/00, G06F 17/30, H04H 60/27

(54) **METHOD AND APPARATUS FOR SWAPPING THE VIDEO CONTENTS OF UNDESIRED COMMERCIAL BREAKS OR OTHER VIDEO SEQUENCES**
VERFAHREN UND VORRICHTUNG ZUM VIDEOINHALTSAUSTAUSCH VON UNERWÜNSCHTEN WERBESPOTS ODER VON ANDEREN VIDEOSEQUENZEN
PROCEDE ET APPAREIL PERMETTANT D'ECHANGER LES CONTENUS VIDEO DE PAUSES PUBLICITAIRES INDESIRABLES OU D'AUTRES SEQUENCES VIDEO

(30) Priority: 01.11.1999 US 431494
(43) Date of publication of application: 31.10.2001
(73) Proprietor: Koninklijke Philips Electronics N.V., 5621 BA Eindhoven (NL)
(72) Inventor: DIMITROVA, Nevenka, NL-5656 AA Eindhoven (NL); MCGEE, Thomas, NL-5656 AA Eindhoven (NL); AGNIHOTRI, Lalitha, NL-5656 AA Eindhoven (NL)
(74) Representative: Damen, Daniel Martijn
(86) International application number: PCT/EP2000/010100
(87) International publication number: WO 2001/033848

(56) References cited:
- EP-A- 0 849 948
- WO-A-00/07367
- WO-A-00/45291
- WO-A-95/15658
- WO-A-99/66719
- US-A- 5 774 170

## Description

### Field Of The Invention

The subject invention relates to television and, more particularly, to the manipulation of video segments or video sequences in a television signal.

### Description Of The Related Art

Television programs, and in particular, broadcast television programs include advertising commercials to at least partially defer the costs of providing the television programs to the viewing public. The content of these commercials are predetermined and usually depend on the amount of money an advertiser is willing to pay to have its commercial broadcast at a specific time. However, no concern is made for the desires of the individual viewer. The viewer is left to either view commercials he/she has no interest in, leave the room (e.g., go to the refrigerator to get a snack), or channel surf, i.e., see what programs are being broadcast on other channels (this can be frustrating in that, invariably, a commercial is usually being broadcast on the other channels). This sometimes causes problems in that the viewer misses the start of the program he/she was viewing before the start of the commercial.

Consumer video cassette recorders are known which include circuitry for detecting commercials in a recorded television program and for fast-forwarding the tape to the end of the commercial. However, the television program must have been previously recorded on a video cassette.

In another situation, television receivers now must include a "V-CHIP" which detects data sent with a television program concerning the content of the television program, e.g., the program rating, the violence content, the sexual content, etc. This allows, for example, a parent to control, at least partially, the content of television programs received for viewing by their children. In the event that the received program is beyond a pre-selected level, either a message is displayed on the screen indicating that the program (or portion of the program) exceeds the allowed level, or the viewer is subjected to a "blue screen" (no video signal for the duration of the program or portion of the program).

United States Patent 5,774,170 discloses a system and method for delivering targeted advertisements to consumers, wherein some "preemptable" television commercials may not be shown to the viewer if they do not fit the viewers needs and interests. However, the patent also describes "non-preemptable" commercials that the system cannot stop from being shown, even if the viewer has no interest in them. This is because the system has to append extra information to the commercial before transmission in order to work, and so consent is required from the agencies or organizations supplying the commercial to do this.

It is an object of the invention to provide a method and apparatus for substituting desired video sequences for undesired commercials or programs (or portions of programs).

This object is achieved, in a first aspect of the invention, in a method for in a user device swapping an undesired video sequence received in a video signal for a desired video sequence, said method comprising the steps of receiving a video signal at a user device; detecting a specific video sequence within said received video signal; generating information representing the characteristics of said specific video sequence from audio and/or visual features of said specific video sequence; comparing said generated information with stored characteristics of other video sequences, said stored characteristics including indicators specifying whether the respective other video sequences are desired; determining whether said specific video sequence is desired based on said stored characteristics; and substituting a desired video sequence in place of said specific video sequence if said specific video sequence is not desired.

A second aspect of the invention provides an apparatus for swapping an undesired video sequence received in a video signal for a desired video sequence, said apparatus comprising means for receiving a video signal; means for detecting a specific video sequence within said received video signal; means for generating information representing the characteristics of said specific video sequence from audio and/or visual features of said specific video sequence; means for comparing said generated information with stored characteristics of other video sequences, said stored characteristics including indicators specifying whether the respective other video sequences are desired; means for determining whether said specific video sequence is desired based on said stored characteristics; and means for substituting a desired video sequence in place of said specific video sequence if said specific video sequence is not desired.

Applicants have found that in order to practice the invention, one must first detect the video sequence subject to being replaced. In the case of commercials, there are several known methods including detecting a change in the average light intensity of a video signal, detecting a change in the "activity" level, detecting increased cut rate and the presence of varying size text, detecting the black level in the video signal which would indicate a break in the program where a commercial is inserted etc. A particular method is disclosed in U.S. Patent Application US-A-6 100 941 , assigned to Philips Electronics.

Next, the video sequence needs to be analyzed to detect known characteristic features. U.S. Patent 5,870,754 (Attorney Docket No. PHA 23,104), assigned to Philips Electronics, discloses a method in which video signatures may be extracted from MPEG or Motion JPEG encoded video sequences for identification purposes, and then stored in a storage medium. Subsequently, a video signature of a suspect video sequence may then be compared with these stored video signature for the purpose of identifying the content of the suspect video sequence.

Patent Application WO-A-9855943 describes a system which detects significant scenes of a video source, selects keyframes to represent each detected significant scene, and creates a video index for the video source. The current video sequence can then be analyzed and the results of the analysis compared with the stored video index.

As an alternative, the video sequence may be examined to detect text regions in the image. Patent Application WO-A-0045291 discloses a method and application for detecting text locations in a video signal. Automatic character recognition may then be used to detect 800-numbers, Domain Names, logos and product names The results may then be compared with a list of 800-numbers, Domain Names, logos and product names. Once the, for example, 800-number is identified, the general classification and purpose of the commercial is known.

Once the identity of the commercial is determined, this information is then compared to a personal profile of the user of the apparatus. For example, in the case of a single childless male, commercials for diapers, other baby products or toys, would not be desired. However, that person might be interested in sporting equipment. Therefore, that person's profile would indicate "NO" for baby commercials and "YES" for sporting equipment.

If, now, the commercial is to be substituted, the alternate video stream may be obtained from a number of different sources. For example, the alternate video stream may be stored in a mass storage medium, e.g., a hard disk drive, a video tape, a video disc, etc. Alternatively, the alternate video stream may be the person's e-mail from a global computer network or Web pages (static or in a browse mode). In addition, in the case of digital television in which a plurality of programs may be available on a single channel, alternate commercials may be broadcast in parallel, and a desired commercial may be retrieved from this source.

With the above and additional objects and advantages in mind as will hereinafter appear, the invention will be described with reference to the accompanying drawings, in which:
Fig. 1 is a block diagram of an apparatus for swapping video sequences in accordance with the invention;
Fig. 2 is a flowchart showing the functioning of the apparatus of Fig. 1;
Fig. 3 is a flowchart showing a portion of the flowchart of Fig. 2 in greater detail; and
Fig. 4 is a flowchart showing another portion of the flowchart of Fig. 2 in greater detail.

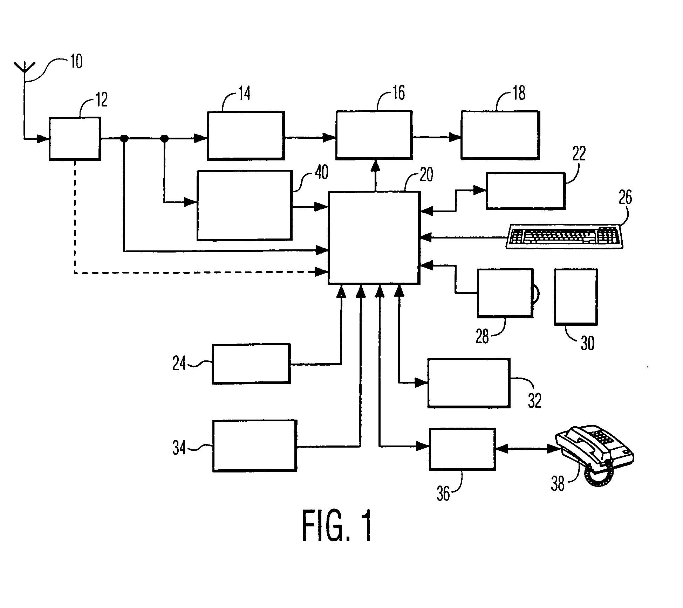

In Fig. 1, input video signals are received on antenna 10 and supplied to a tuner 12. While antenna 10 is shown which would imply that the source of the input video signals is broadcast television, it should be understood that the input video signals may originate from other sources, e.g., cable, satellite, a global computer network, etc. The tuner 12 tunes to a desired video signal and applies the same to a frame memory 14. An output from the frame memory 14 is connected to a video switch 16 which applies its output to display device 18, for example, a television receiver.

A controller 20, which includes an internal microprocessor, controls the operation of the components in the apparatus. A memory 22 in the form of random-access memory (RAM) is connected to the controller 20, as well as a read-only memory (ROM) 24. A keyboard 26 is shown for providing a user interface for the apparatus. Alternatively, an infra-red receiver 28 and corresponding remote transmitter 30 may be connected to the controller 20.

A video storage device 32, for example, a video tape recorder/player, a DVD re-writeable device (DVD-RW), a digital VHS tape recorder/player (D-VHS), a digital video recorder/player (DVR), etc., is shown connected to the controller 20 for recording and supplying video signals. In addition, a video disc player 34 is connected to the controller 20 for providing selected video programming. Finally, a modem 36 is connected to the controller 20 for interfacing with a telephone network 38 for allowing access to a global computer network enabling the sending and reception of e-mail.

The controller 20 is connected to the output of the tuner 12 for receiving the desired video signal. A V-Chip/Meta data extractor 40 is also connected to the output of the tuner 12 for extracting V-Chip data as well as Meta data which may be transmitted with the desired video signal. Finally, the controller 20 may be additionally connected directly to the tuner 12 for receiving programming on alternate channels.

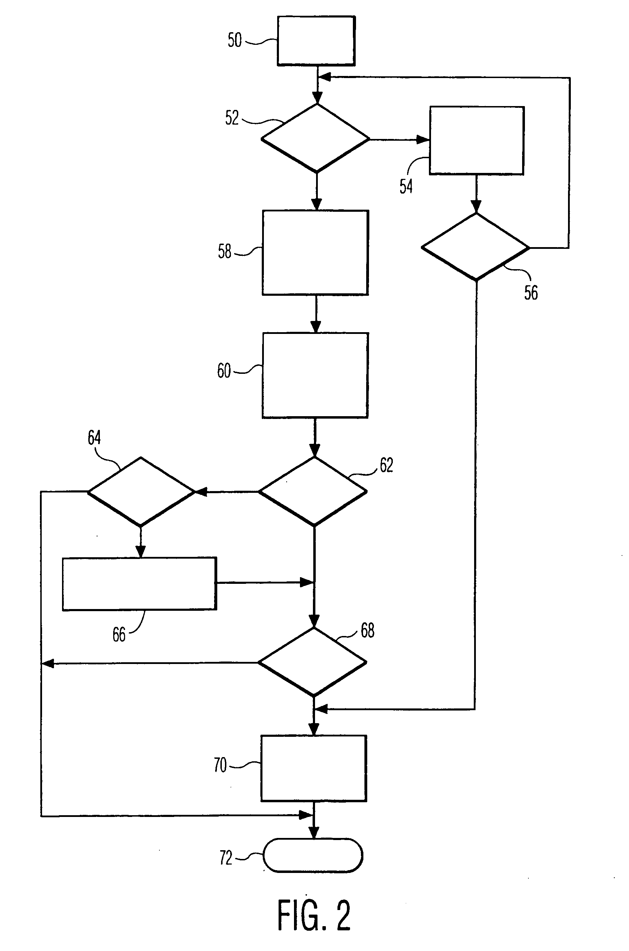

In operation, referring to the flowchart of Fig. 2, at block 50, the controller 20 receives the video signal at the output of the tuner 12. At block 52, the controller 20 determines whether the video signal contains a commercial. If not, the controller 20 examines, in block 54, the extracted V-Chip data from the V-Chip/Meta data extractor 40 and determines whether the programming in the video signal is restricted (block 56). If not, the controller 20 continues to examine the video signal for commercials (block 52). If the programming is restricted, the controller 20 inserts alternate programming (block 70).

When a commercial is detected, the controller 20 extracts the audiovisual/textual features and/or signature of the commercial in block 58, and compares these features or signature to a stored data-base of such features and signatures (block 60). In block 62, it is determined whether the features and/or signature of the commercial is indeed stored. If not, in block 64, the user is given the option to store the features and/or signature, and if so, the features and/or signatures are stored, in block 66. If the user decides not to store the features and/or signature, the controller 20 exits the flowchart at block 72.

At block 68, the controller 20 determines whether the commercial is desired. If so, the controller 20 exits the flowchart at 72. If the commercial is not desired, at block 70, the controller 20 inserts alternate programming using the video switch 16. The alternate programming may come from any of a plurality of sources. For example, alternate commercials may be stored in the ROM 24, on the video storage device 32, or on video disc using the video disc player 34. In the event of digital television (DTV), each channel may contain several video programming streams among which may be alternate commercials. If so, the alternate commercials may then be accessed for insertion. Otherwise, the controller 20 may access the modem 36 to enable the user to read or send e-mail messages or access Web pages during the commercial break.

The user's personal profile may be stored in the ROM 24 and includes information about the preferred sources, time and duration of substitution. The sources may be, as noted above, the video storage device 32, the video disc player 34, alternate programming from the tuner 12, or the modem 36 for accessing a global computer network for e-mail or web browsing. The user-preferred sources of information may be based on the time of day, for example, in the morning, the user may prefer substitution of another channel, or a personalized news channel in that the user may be getting ready to go to work and would like a passive content swap. In the evening, the user may prefer a more interactive swapping, for example, e-mail or web browsing.

The duration of the substitution may be based on the type of content, the duration of the content being replaced, and the time of day. For example, if the commercial break is 6 minutes, the user may want 2 minutes of e-mail, and a summary of the commercials. If the commercial is less than 2 minutes, the user may prefer no swapping. Alternatively, other shortened video sequences may be obtained from stored content.

There may also be the occasion where, during a swap, the user has started an e-mail and does not want to be interrupted to go back to the regular programming until the user has finished the e-mail message. In that event, the regular programming may be buffered on, for example, the video storage device 32 or on a Tivo unit (not shown), until the user has finished the e-mail message.

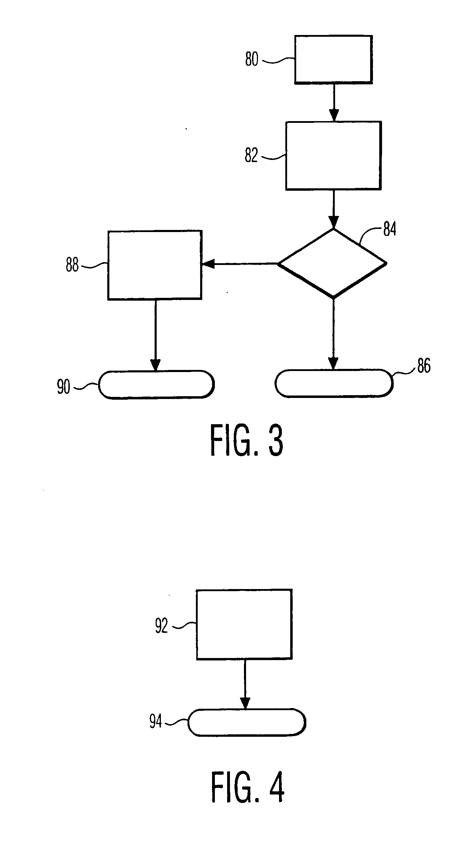

Fig. 3 is a flowchart showing more details of block 58 in Fig. 2. In particular, at block 80, the controller 20 extracts textual data from the output of the tuner 12. At block 82, the controller 20 then compare that extracted data with stored text and determines whether the extracted text is stored (block 84). If so, at block 86, the controller 20 proceeds to block 68 in the flowchart of Fig. 2. If not, the controller 20 then extracts the audiovisual data in block 88 and, at block 90, proceeds with block 60 in the flowchart of Fig. 2.

Alternatively, as noted above, the program in the video signal may include Meta data which characterizes the content of the program and/or commercials. If so, as shown in Fig. 4, the controller 20, after detecting a commercial at block 52 in Fig. 2, then examines, in block 92, the Meta data and uses this data to characterize the commercial. Again, at block 90, this is compared to the user's personal profile in block 68 of Fig. 2, to determine if the commercial is desired, and if not, the controller 20 inserts alternate programming (block 70).

As mentioned in the accompanying claims, video signatures may be derived from audio clues in the video sequence. Where video signatures are so derived from audio clues in the video sequence, these audio clues may include energy, band energy ratio, pause rate, pitch, Fourier transform co-efficients and Mel Spectrum frequency co-efficients. The video signatures may be obtained from closed captioning content.

The stored characteristics referred to in the claims maycomprise a time duration of the video sequence to be substituted.

Where the desired video sequence comprises Web pages, the pages may be scanned passively. Where the desired video sequence comprises Web pages, the pages may be scanned interactively.

Numerous alterations and modifications of the structure herein disclosed will present themselves to those skilled in the art. However, it is to be understood that the above described embodiment is for purposes of illustration only and not to be construed as a limitation of the invention. The invention is intended to be defined by the scope of the appended claims.

## Claims

1. A method for in a user device swapping an undesired video sequence received in a video signal for a desired video sequence, said method comprising the steps:
- receiving (50) a video signal at a user device;
- detecting (52) a specific video sequence within said received video signal;
- generating (58) information representing the characteristics of said specific video sequence from audio and/or visual features of said specific video sequence;
- comparing (60) said generated information with stored characteristics of other video sequences, said stored characteristics including indicators specifying whether the respective other video sequences are desired;
- determining (62) whether said specific video sequence is desired based on said stored characteristics; and
- substituting (70) a desired video sequence in place of said specific video sequence if said specific video sequence is not desired.

2. The method as claimed in claim 1, wherein said method further comprises the steps of storing (66) said generated information representing characteristics of said specific video sequence if said characteristics are not already stored; and storing (66) an indicator specifying whether said specific video sequence is desired.

3. An apparatus for swapping an undesired video sequence received in a video signal for a desired video sequence, said apparatus comprising:
- means (20) for receiving a video signal;
- means (20) for detecting a specific video sequence within said received video signal;
- means (20) for generating information representing the characteristics of said specific video sequence from audio and/or visual features of said specific video sequence;
- means (20) for comparing said generated information with stored characteristics of other video sequences, said stored characteristics including indicators specifying whether the respective other video sequences are desired;
- means (20) for determining whether said specific video sequence is desired based on said stored characteristics; and
- means (16) for substituting a desired video sequence in place of said specific video sequence if said specific video sequence is not desired.

4. The apparatus as claimed in claim 3, wherein said apparatus further comprises:
- means (24) for storing said generated information representing characteristics of said specific video sequence if said characteristics are not already stored; and
- means (24) for storing an indicator specifying whether said specific video sequence is desired.

5. The method of claim 1 or 2 or the apparatus of claim 3 or 4, wherein said specific video sequence is a commercial (52) in a television broadcast signal.

6. The method or apparatus as claimed in any one or more of claims 1 to 5, wherein said characteristics are video signatures of video sequences.

7. The method or apparatus as claimed in claim 6, wherein said video signatures are derived from audio clues in the video sequence.

8. The method or apparatus as claimed in any one or more of claims 1 to 5, wherein said characteristics are textual matter contained in video sequences.

9. The method or apparatus as claimed in any one or more of claims 1 to 8, wherein said substituting step comprises retrieving said desired video sequence from a storage medium.

10. The method or apparatus as claimed in any one or more of claims 1 to 8, wherein said specific video sequence is on one channel of a digital television broadcast having a plurality of channels, and said substituting step comprises retrieving said desired video sequence from an alternate channel transmitted with said one channel.

11. The method or apparatus as claimed in any one or more of claims 1 to 5, wherein said detecting a specific video sequence comprises detecting Meta data accompanying the video sequence.

12. The method or apparatus as claimed in claim 11, wherein said Meta data comprises V-Chip data (54), and wherein said step of generating information representing the characteristics comprises comparing (56) the V-Chip data with stored desired personal characteristics of the user.

13. The method or apparatus as claimed in any one or more of claims 1 to 5, wherein said stored characteristics comprise categories of commercials and products.

14. The method or apparatus as claimed in any one or more of claims 1 to 5, wherein the desired video sequence comprises Web pages (36, 38).

15. The method of claim 1 or apparatus of claim 3, wherein the detecting comprises detecting in the video sequence any one or more of:
- a change in the average light intensity;
- a change in the activity level;
- an increased cut rate; or
- the black level.

## Patentansprüche

1. Verfahren um in einer Benutzeranordnung eine in einem Videosignal empfangene unerwünschte Videofolge gegen eine gewünschte Videofolge auszutauschen, wobei das genannte Verfahren die nachfolgenden Verfahrensschritte umfasst:
- das Empfangen (50) eines Videosignals in einer Benutzeranordnung,
- das Detektieren (52) einer bestimmten Videofolge innerhalb des genannten empfangenen Videosignals,
- das Erzeugen (58) von Information, welche die Kennzeichen der genannten bestimmten Videofolge von Audio- und/oder Videomerkmalen der genannten bestimmten Videofolge darstellt,
- das Vergleichen (60) der genannten erzeugten Information mit gespeicherten Merkmalen anderer Videofolgen, wobei die genannten gespeicherten Merkmale Angaben enthalten, die spezifizieren, ob die betreffenden anderen Videofolgen erwünscht sind,
- das Ermitteln (62), ob die genannte bestimmte Videofolge erwünscht ist, und zwar auf Basis der genannten gespeicherten Merkmale; und
- das Ersetzen (70) der bestimmten Videofolge, wenn die genannte bestimmte Videofolge unerwünscht ist, durch eine gewünschte Videofolge.

2. Verfahren nach Anspruch 1, wobei das genannte Verfahren weiterhin die nachfolgenden Verfahrensschritte umfasst, und zwar das Speichern (66) der genannten erzeugten Information, die Kennzeichen der genannten bestimmten Videofolge darstellt, wenn die genannten Kennzeichen nicht bereits gespeichert worden sind; und das Speichern (66) eines Indikators, der spezifiziert, ob die genannte bestimmte Videofolge erwünscht ist.

3. Anordnung zum Austauschen einer in einem Videosignal empfangenen unerwünschten Videofolge gegen eine erwünschte Videofolge, wobei die genannte Anordnung Folgendes umfasst:
- Mittel (20) zum Empfangen eines Videosignals,
- Mittel (20) zum Detektieren einer bestimmten Videofolge innerhalb des genannten empfangenen Videosignals,
- Mittel (20) zum Erzeugen von Information, welche die Kennzeichen der genannten bestimmten Videofolge von Audio- und/oder Videomerkmalen der genannten bestimmten Videofolge darstellt,
- Mittel (20) zum Vergleichen der genannten erzeugten Information mit gespeicherten Merkmalen anderer Videofolgen, wobei die genannten gespeicherten Merkmale Indikatoren enthalten, die spezifizieren, ob die betreffenden anderen Videofolgen erwünscht sind,
- Mittel (20) zum Ermitteln, ob die genannte bestimmte Videofolge erwünscht ist, und zwar auf Basis der genannten gespeicherten Merkmale; und
- Mittel (16) zum Ersetzen der bestimmten Video folge, wenn die genannte bestimmte Videofolge unerwünscht ist, durch eine gewünschte Videofolge.

4. Anordnung nach Anspruch 3, wobei die genannte Anordnung weiterhin Folgendes umfasst:
- Mittel (24) zum Speichern der genannten erzeugten Information, die Merkmale der genannten bestimmten Videofolge darstellt, wenn die genannten Merkmale nicht bereits gespeichert worden sind, und
- Mittel (24) zum Speichern eines Indikators, der spezifiziert, ob die genannte bestimmte Videofolge erwünscht ist.

5. Verfahren nach Anspruch 1 oder 2 oder Anordnung nach Anspruch 3 oder 4, wobei die genannte bestimmte Videofolge eine Reklamesendung (52) in einem Femsehsendesignal ist.

6. Verfahren oder Anordnung nach einem oder mehreren der vorstehenden Ansprüche, wobei die genannten Merkmale Videosignaturen von Videofolgen sind.

7. Verfahren oder Anordnung nach Anspruch 6, wobei die genannten Videosignaturen von Audiohinweisen in der Videofolge hergeleitet werden.

8. Verfahren oder Anordnung nach einem der vorstehenden Ansprüche 1 bis 5, wobei die genannten Merkmale Textmaterial in den Videofolgen ist.

9. Verfahren oder Anordnung nach einem der vorstehenden Ansprüche 1 bis 8, wobei der genannte Ersetzungsschritt das Ermitteln der genannten erwünschten Videofolge aus einem Speichermedium umfasst.

10. Verfahren oder Anordnung nach einem der vorstehenden Ansprüche 1 bis 8, wobei die genannte bestimmte Videofolge sich in einem Kanal einer digitalen Fernsehsendung mit einer Vielzahl Kanäle befindet, und wobei der genannte Ersetzungsschritt das Ermitteln der genannten erwünschten Videofolge aus einem alternativen Kanal umfasst, der mit dem genannten einen Kanal übertragen worden ist.

11. Verfahren oder Anordnung nach einem der vorstehenden Ansprüche 1 bis 5, wobei die genannte Detektion einer bestimmten Videofolge das Detektieren von Metadaten umfasst, welche die Videofolge begleiten.

12. Verfahren oder Anordnung nach Anspruch 11, wobei die genannten Metadaten V-Chipdaten (54) umfassen, und wobei der genannte Schritt der Erzeugung von Information, welche die Merkmale darstellen, das Vergleichen (56) der V-Chipdaten mit gespeicherten, erwünschten persönlichen Merkmalen des Benutzers umfasst.

13. Verfahren oder Anordnung nach einem der vorstehenden Ansprüche 1 bis 5, wobei die genannten gespeicherten Merkmale Kategorien von Werbesendungen und Produkten umfassen.

14. Verfahren oder Anordnung nach einem der vorstehenden Ansprüche 1 bis 5, wobei die gewünschte Videofolge Webseiten (36, 38) umfasst.

15. Verfahren nach Anspruch 1 oder Anordnung nach Anspruch 3, wobei die Detektion das Detektieren eines oder mehrerer der nachfolgenden Elemente in der Videofolge umfasst:
- einer Änderung in der mittleren Lichtintensität,
- einer Änderung in dem Aktivitätspegel,
- einer zugenommenen Schnittfrequenz, oder
- des Schwarzpegels.

## Revendications

1. Procédé pour échanger dans un dispositif d'utilisateur une séquence vidéo peu souhaitée qui est reçue dans un signal vidéo pour une séquence vidéo souhaitée, ledit procédé comprenant les étapes consistant à:
- recevoir (50) un signal vidéo dans un dispositif d'utilisateur;
- détecter (52) une séquence vidéo spécifique dans ledit signal vidéo reçu;
- générer (58) de l'information représentant les caractéristiques de ladite séquence vidéo spécifique à partir de dispositifs audio et/ou vidéo de ladite séquence vidéo spécifique;
- comparer (60) ladite information générée à des caractéristiques stockées d'autres séquences vidéo, lesdites caractéristiques stockées comprenant des indicateurs spécifiant si les autres séquences vidéo respectives sont souhaitées;
- déterminer (62) si ladite séquence vidéo spécifique est souhaitée sur la base desdites caractéristiques stockées; et
- substituer (70) une séquence vidéo souhaitée à ladite séquence vidéo spécifique si ladite séquence vidéo spécifique n'est pas souhaitée.

2. Procédé selon la revendication 1, dans lequel ledit procédé comprend encore les étapes consistant à stocker (66) ladite information générée représentant les caractéristiques de ladite séquence vidéo spécifique si lesdites caractéristiques ne sont pas déjà stockées et à stocker (66) un indicateur spécifiant si ladite séquence vidéo spécifique est souhaitée.

3. Appareil pour échanger une séquence vidéo peu souhaitée qui est reçue dans un signal vidéo pour une séquence vidéo souhaitée, ledit appareil comprenant:
- des moyens (20) pour recevoir un signal vidéo;
- des moyens (20) pour détecter une séquence vidéo spécifique dans ledit signal vidéo reçu;
- des moyens (20) pour générer de l'information représentant les caractéristiques de ladite séquence vidéo spécifique à partir de dispositifs audio et/ou vidéo de ladite séquence vidéo spécifique;
- des moyens (20) pour comparer ladite information générée à des caractéristiques stockées d'autres séquences vidéo, lesdites caractéristiques stockées comprenant des indicateurs spécifiant si les autres séquences vidéo respectives sont souhaitées;
- des moyens (20) pour déterminer si ladite séquence vidéo spécifique est souhaitée sur la base desdites caractéristiques stockées; et
- des moyens (16) pour substituer une séquence vidéo souhaitée à ladite séquence vidéo spécifique si ladite séquence vidéo spécifique n'est pas souhaitée.

4. Appareil selon la revendication 3, dans lequel ledit appareil comprend encore:
- des moyens (24) pour stocker ladite information générée représentant les caractéristiques de ladite séquence vidéo spécifique si lesdites caractéristiques ne sont pas déjà stockées; et
- des moyens (24) pour stocker un indicateur spécifiant si ladite séquence vidéo spécifique est souhaitée.

5. Procédé selon la revendication 1 ou 2 ou appareil selon la revendication 3 ou 4, dans lequel ladite séquence vidéo spécifique est un message publicitaire (52) dans un signal de télédiffusion.

6. Procédé ou appareil selon l'une quelconque ou selon plusieurs des revendications précédentes 1 à 5, dans lequel lesdites caractéristiques sont des signatures vidéo de séquences vidéo.

7. Procédé ou appareil selon la revendication 6, dans lequel lesdites signatures vidéo sont dérivées d'indications audio dans la séquence vidéo.

8. Procédé ou appareil selon l'une quelconque ou selon plusieurs des revendications précédentes 1 à 5, dans lequel lesdites caractéristiques constituent une matière textuelle qui est contenue dans des séquences vidéo.

9. Procédé ou appareil selon l'une quelconque ou selon plusieurs des revendications précédentes 1 à 8, dans lequel ladite étape de substitution comprend l'extraction de ladite séquence vidéo souhaitée à partir d'un support de mémoire.

10. Procédé ou appareil selon l'une quelconque ou selon plusieurs des revendications précédentes 1 à 8, dans lequel ladite séquence vidéo spécifique se situe sur un canal d'une télédiffusion numérique ayant une pluralité de canaux et dans lequel ladite étape de substitution comprend l'extraction de ladite séquence vidéo souhaitée à partir d'un canal alternatif qui est transmise avec ledit un canal.

11. Procédé ou appareil selon l'une quelconque ou selon plusieurs des revendications précédentes 1 à 5, dans lequel ladite détection d'une séquence vidéo spécifique comprend la détection des méta-données accompagnant la séquence vidéo.

12. Procédé ou appareil selon la revendication 11, dans lequel lesdites méta-données comprennent des données de puces V (54) et dans lequel ladite étape consistant à générer de l'information représentant les caractéristiques comprend la comparaison (56) des données de puces V à des caractéristiques personnelles souhaitées stockées de l'utilisateur.

13. Procédé ou appareil selon l'une quelconque ou selon plusieurs des revendications précédentes 1 à 5, dans lequel lesdites caractéristiques stockées comprennent des catégories de messages publicitaires et de produits.

14. Procédé ou appareil selon l'une quelconque ou selon plusieurs des revendications précédentes 1 à 5, dans lequel la séquence vidéo souhaitée comprend des pages WEB (36, 38).

15. Procédé selon la revendication 1 ou appareil selon la revendication 3, dans lequel la détection comprend la détection dans la séquence vidéo de l'une quelconque ou de plusieurs des cas suivants:
- un changement de l'intensité lumineuse moyenne;
- un changement du niveau d'activité;
- un taux de rendement plus élevé; ou
- le niveau noir.
